**Europäisches Patentamt**

**European Patent Office**

**Office européen des brevets**

(11) Publication number: **0 012 589**
A1

# EUROPEAN PATENT APPLICATION

(21) Application number: 79302843.2

(22) Date of filing 10.12.79

(51) Int. Cl.³: **B 29 J 1/00**, B 29 C 3/00, B 29 D 3/02 // B28B13/02, C04B25/00

(30) Priority: 11.12.78 DK 5565/78

(43) Date of publication of application: 25.06.80 Bulletin 80/13

(84) Designated Contracting States: AT BE CH DE FR GB IT LU NL SE

(71) Applicant: Norcem A/S, Haakon VII's gt. 2,, Oslo 1 (NO)

(72) Inventor: Kroyer, Karl Kristian, Le Schuykill, Apt. No. 1 Block B, 3e etage, 19 Boulevard de Suisse Monte Carlo (MC)
Inventor: Pedersen, Nils, Grefsen Alle 4A, Oslo 4 (NO)
Inventor: Kok, Henning, Orionsvej 20, DK-8270 Hojbjerg (DK)
Inventor: Johansen, Jens Peter, Abrikosvej 31, DK-4700 Naestved (DK)

(74) Representative: Lambert, Hugh Richmond et al, D. Young & Co. 10 Staple Inn, London WC1V 7RD (GB)

(54) A method of making shaped articles and an apparatus for carrying out the method.

(57) Shaped articles such as corrugated sheets, are manufactured from a dry mixture of mineral powder and organic binders which, from a dosage device (9) is applied in a layer in a mould (12) which defines an optionally corrugated substratum. A good adhesion to the powder mixture is imparted to the surface of the substratum, preferably by applying a surface layer of a mixture of a binder and mineral powder. The mould (12) is advanced under the dosage device (9) and under a special shaping and compressing device (11) for the powder mixture. The contact face of the device (11) has a profile adapted to the shape of the articles, is mounted behind the dosage device transversely across the entire width of the mould (12) and is inclined a few degrees relative to the plane of mould travel so that the relative movement of the contact face of the device (11) ensures a uniform compression of the powder layer (13). The compressed powder mixture is then hot-pressed into shaped articles. The apparatus comprises moulds (12), which define optionally corrugated substrata, heating devices, pressing devices and dosage device (9), behind which there is mounted a shaping and compressing device (11) as described above. During the advancing operation the moulds (12) may be fixed in the proper position in that they are placed on their respective suction boxes (15). The suction boxes (15) are interconnected to a chain, and their surfaces correspond to the lower surface of the moulds (12). The suction boxes (15) are provided with holes for the provision of vacuum under the moulds (12).

A method of making shaped articles and an apparatus
for carrying out the method

The present invention relates to a method of making
shaped articles from a dry mixture of mineral powder
and organic polymeric binders which is applied in a
layer in a mould by means of a dosage device, said mould
defining a substratum with a profile adapted to the
desired shape of the article, and is then heated and
compressed into shaped articles of the desired shape.

Known methods of making various shaped articles, such
as plane or profiled sheets from mineral powders or
sand and organic polymeric binders, are based on the
fact that these mixtures are plastic or semi-liquid.
When subjected to calendering or extrusion and also
compression in moulds the mixtures will spread and fill
the mould prior to curing, leading to products of the
desired shape.

When the amount of binder is significantly reduced, e.g.
to 5-6% by weight, which is very desirable seen from an
economic point of view, such mixtures will no longer
possess any measurable plastic flowing unless solvents
are added, and it is therefore very difficult, if not
impossible to obtain satisfactory products by the above
methods.

If solvents or water is used, which must then be removed
at a later stage in the process, the products will get
a lower specific weight, and another drawback is the
additional amount of energy required to remove the

solvents or water.

When the mould is filled with a dry powder it is important that the whole mould part should be filled with the
proper amount of powder mixture, because the products
will then have the desired thickness and there will
be no need for replenishment of the mould, nor will
there be any excess powder to remove.

If, however, an ordinary, smooth steel mould, which may
be plane or profiled in one dimension, is filled with
a dry powder mixture by dosage of the powder from the
top by means of a dosage device, such as a hopper, it
is very difficult to avoid vertical cracks in the powder
relative to the plane of mould travel, in particular
if the mould is profiled. The reason is that the powder
tends to slide along the smooth surface of the mould.

The object of the present invention is to provide a
method of making shaped articles having a uniform
density and good mechanical properties, which eliminates
these drawbacks and permits the use of substantially
dry powder mixtures which have no significant flowing
when compressed.

Another object of the invention is to obtain a uniform
filling of the whole mould without cracks in the powder.

Accordingly, the invention provides a method of making
shaped articles from a dry mixture of a major amount
of mineral powder and organic binders which is applied
in a layer in moulds by means of a dosage device, said
moulds defining a substratum with a profile adapted to
the desired shape of the article and is then heat-treated
and compressed, characterized by filling the dry mixture
into moulds whose surface had good adhesion to the dry mixture, said moulds being advanced in a plane under the dosage device and a shaping and compressing device whose contact face has a profile adapted to the desired shape of the article and is mounted behind the dosage device transversely across the entire width of the mould and is inclined a few degrees relative to the plane of mould travel, and by shaping and compressing the dry mixture to a uniform layer by means of the shaping and compressing device, followed by hot pressing of the powder mixture, optionally after preheating, in the mould to produce shaped articles of the desired shape.

Thus, in the method of the invention the powder mixture is dosed through a dosage device mounted above the mould. By advancing the mould in a horizontal plane under the dosage device the powder will be distributed over the whole mould part thanks to the shaping and compressing device, whose profile is adapted to the profile of the desired article and to the upper mould tool in the press used for compressing the articles.

The method of the invention permits the mould to be filled exactly to the desired level with the intended compression, and no cracks will occur in the powder mixture in mould. This is due to the recognition that the shaping and compressing device of the invention compress the powder mixture in the mould. This is surprising because it would be expected that instead of being compressed the powder would be sort of loosened when the mould is advanced under the dosage device, as, normally, it would be expected that the shaping and compressing device would carry excess powder mixture in a direction opposite the travelling direction of the mould so that the powder mixture would be filled in the mould with a density equal to or lower than the density of the mixture at the bottom of the dosage device.

The compression action is due to the fact that the powder mixture does not slide when advanced. In the face contacting the surface of the mould the mineral powder particles will be anchored to the mould surface owing to adhesion, and this anchoring will spread up through the layer. Therefore, it is particularly advantageous that the particles have an irregular surface. The pressure from the inclined shaping and compressing device allows the articles to be packed more densely because owing to their preferred irregular surface structure they will also become anchored to one another and will not tend to be carried along in a direction opposite to the direction of mould travel. The compression permits the powder mixture to be laid in a dense and quite uniform layer in which the particles do not tend to slip. This obviates the drawbacks of the known methods mentioned in the foregoing.

The compression described is most pronounced in powder layers with a thickness of up to about 2 cm. In thicker powder layers anchoring of the particles will decrease and the compression effect will decline.

Sliding of the powder up through the layer may, as mentioned above, advantageously be avoided by using mineral particles with an irregular surface structure. A mineral powder satisfying this requirement is commercially available under the name of "Synopal ®" and is described i.a. in the British Patent Specification No. 992,782, cf. the Danish Patent No. 100,256 and the U.S. Patent No. 3,266,879, which are all incorporated herein by reference. It is produced by fusing e.g. sand, chalk, and dolomite in a rotary kiln, leading to a frit of a highly blistered, crystallizable glass. However, other types of glass and mineral powders with a surface as irregular as possible may be used. Thus, it is e.g. possible to use a related, black or dark-coloured glass material made from i.a. fly ash, produced e.g. as described in the Belgian Patent 862,645 (cf. Danish Patent Application 5873/77) and co-pending U.S. Application Serial No. 869,282 filed on December 28, 1977, now allowed, which is incorporated herein by reference.

It has been found that in the shaping technique of the invention products of good strength properties can even be obtained with so low amounts of binder as 3% by weight, advantageously 5-10, in particular 5-8% by weight, based on the total weight of the mixture. The process will also work with higher amounts, e.g. 10-15%, but is then less attractive for economic reasons.

As organic binder is preferably used a phenol resin because it is inexpensive, has a long life and is suitable for coloured products. Other thermosetting binders may be used as well, e.g. epoxy resins, melamine resins, urea formaldehyde resins, polyurethanes, polyesters and polyacrylates.

Thermoplastic binders may be employed as well. The use of such binders will not bring about any curing, but only melting.

The above mineral powders and binders may be combined in any appropriate manner, depending upon the desired final product.

Applicable mixtures of mineral powder and binder are e.g. those described in the Danish Patent Application No. 212/76, cf. the U.S. Patent No. 4,157,907 and Belgian Patent No. 850,466, and the Danish Patent Appli-

6          0012589

cation No. 2241/77, cf. the co-pending U.S. Application
Serial No. 798,980, filed on May 20, 1977 and Belgian
Patent No. 854,977, which are all incorporated herein
by reference.

As mentioned, it is characteristic of the present method
that a mould is used whose surface has a good adhesion
to the mixture of mineral powder and binder. The good
adhesion may be provided in several ways.

First, the mould itself may have a rough surface or a
rough and/or adhesive surface may be imparted to it by
applying a surface layer of an organic binder, optionally containing mineral powder, to the mould which has
optionally been preheated, depending upon the consistency and melting point of the binder. In a preferred
embodiment a preheated mould and a mixture of an organic,
preferably powdered binder and mineral powder, are used
and the mould is then cooled so that the surface layer
does not melt entirely, but only in the lower portion
adjacent the face contacting the hot surface of the
mould. During melting the mould will be cooled, and as
no additional heat is supplied the melting will not
spread upwards in the surface layer. The advantage of
this is that the surface layer melts on the surface of
the mould and still has a rough, crater-like upper
surface because, as mentioned, the binder does not melt
in the upper portion of the surface layer.

According to the invention, the surface layer may
contain 15-100% of an organic binder, based on the
total weight, and may thus in borderline cases be a
pure adhesive. In addition to binder the surface layer
may comprise the same inorganic components as the
mineral powder-binder mixture, i.e. e.g. a glass frit
or any other suitable inorganic mineral powder. As

7    0012589

organic binder may be used thermoplastic binders, such
as polyesters, polyolefins, polyacrylates, polyvinyl
acetate, polystyrenes, polyamides and polycarbonates,
or thermosetting binders selected from among polyurethanes,
polyacrylates, polyesters, epoxy resins, melamines,
urea formaldehyde resins and phenol resins. The thickness of the surface layer is preferably in the range
of 50-250 $\mu$m, depending upon the content of binder in
the surface layer.

Before coating the mould with the surface layer the mould
is preheated, if desired, to a temperature 10-20$^o$C
above the melding point of the binder. The application
of the surface layer to the hot mould results in an
initial melting of the binder.

The surface layer may be applied in the mould in different ways. The mould may e.g. be preheated to the melting
and sintering temperature of the binder, and is then
filled with an excess of the surface mixture. After a
suitable period of time, during which part of the
binder melts on the surface of the mould, excess of the
surface mixture is removed, e.g. by suction, brushing
or by turning the mould upside down.

The mould may also be preheated and the surface mixture
may be applied in the desired amount by sprinkling thereon by gravitation, or the mould is preheated and the
surface mixture is applied by electrostatic application techniques.

Alternatively, a suspension or dispersion of the surface
mixture is applied to the mould, and solvent or dispersion medium is then removed. Finally, a liquid binder
may be applied onto a non-preheated mould.

According to the invention, it is preferred to apply the surface layer electrostatically as this has been found to be the quickest and most efficient method providing the most uniform surface layer.

In the subsequent dosage of the powder and binder mixture the good adhesion of the mould, e.g. owing to the rough and crater-like surface, will be able to retain the powder mixture dosed on the surface layer.

It is also surprising that during the subsequent hot pressing the surface layer and the mineral-powder and binder layer dosed thereon adhere so well to each other that the pressed sheet can be removed from the mould without the surface layer tending to become delaminated. This is due to the fact that the binders in the two layers in the contact faces have not been cured completely prior to the hot pressing. During hot pressing the binders cure completely and the two layers are integrated in the contact face, making the layers adhere effectively to each other.

One or more stirring means may optionally be mounted in the dosage device which serve to pre-compress and smooth out the powder mixture over the width of the mould.

When the mineral powder and binder mixture has been dosed, possibly on a surface layer already disposed in the mould, the mould with the compressed mixture of mineral powder and binder is optionally preheated before the mould is introduced to a heated press for shaping of the sheets. This results in an initial melting, leading to a plastic substance. The purpose of the preheating is to shorten and facilitate the subsequent pressing operation.

When pressed, the shaped article is taken out of the
mould either directly or after an additional curing
period and/or cooling period.

In the present method the pressing period may be made
exceptionally brief, it being sufficient to press for
such a brief period as 15-20 sec., in particular if
preheating is used. Depending upon the nature of the
binder the temperature in the press may be in the range
of about 180 to about 250$^{o}$C, and the pressure exerted
may be from about 100 to about 150 kg/cm$^{2}$, depending
upon the mineral.

The shaping and compressing device of the invention will
also bring about a quite smooth surface on the products.
Compression may be further intensified by imparting
some vibration to the shaping and compressing device,
depending upon the granulometry curve of the powder
mixture.

If one or more dosage devices are inserted before the
press a corresponding number of different layers may
be introduced in the product. It is also possible to
introduce fibre materials, e.g. glass wool, mineral or
metal fibres, in and/or between the layers to reinforce
them.

Different surface effects, e.g. coloured surface layers,
may be obtained by suitable selection of combinations
of powder and binder in the optional surface layer
disposed at the bottom in the mould, provided that the
underside of the product in the mould is to be the upper
side of the finished product.

Finally, the colour of the final product may of course be varied by employing particles having the desired colour, e.g. black particles in the manufacture of roofing sheets, or by changing the type and amount of binder in the mixture of powder and binder.

It may be desirable to place plastic or metal foils on the free surface of the mouldable material before the pressing operations. Pressing makes the foil an integral part of the product.

The invention also relates to an apparatus for carrying out the method of the invention, said apparatus comprising a dosage device, moulds, pressing devices, heating devices, and optionally fixing and retaining means for the moulds. The apparatus is characterized in that a shaping and compressing device is mounted behind the dosage device and extends transversely across the entire width of the mould and is inclined a few degrees relative to the plane of the mould travel.

The shaping and compressing device is preferably mounted direct on the dosage device because this provides the best distribution of the powder in the mould.

It may be advantageous to impart some vibration to the shaping and compressing device for improving the distribution in the mould. To this end the apparatus of the invention comprises vibration means, preferably in the form of an electromagnetic vibrator. In that event, the shaping and compressing device is usually not mounted direct on the dosage device.

During the filling of the powder mixture in the mould the mould is advanced in a horizontal plane under the dosage device, as described above. To achieve great
precision during the filling operation it is very desirable that the mould is fixed precisely and immovably
in the proper position and that it is retained in this
position until it is inserted in the press. This may be
achieved by means of various rollers or similar techniques, but the result is not always satisfactory. Even
though the moulds are made very strong they will often
tend to become deformed or twisted to some extent, which
causes poor precision in the distribution of the powder
mixture over the whole mould. Furter, the forward movement of the mould under the dosage device may meet with
a considerable amount of resistance that is to be overcome and which may easily cause sliding on the rollers
if no special measures are taken, such as forced advancing
with special means, such as hydraulic or pneumatic
cylinders, screws or other drive systems.

On the other hand it is very desirable to use very light
moulds in a shaping process of this type, in which the
moulds containing the powder mixture are heated repeatedly. To reduce the heat requirements and to facilitate
rapid distribution of the heat in the powder mixture
it is therefore desirable to use moulds produced from
metal sheets as thin as possible. Such a light construction impairs, however, the dimentional stability.

According to the invention, it has been found particularly advantageous to mount the mould removably on a suction
box whose surface has essentially the same profile as
the underside of the mould. A vacuum may then be provided
through holes or slots in the upper surface of the suction box. The suction box may be placed on a chain or
is itself part of a chain which is advanced under the
dosage device by suitable mechanical means. This chain is preferably continuously operated so that the process may be run continuously.

The suction box system just described possesses several advantages over other known comparable systems of transport: The moulds are forced to assume the exact shape and are immovably retained during the filling operation and the subsequent transport to the press and may be moved at a precise and well-controlled speed, and may be of a light and simple construction. This is a great economic advantage in terms of production and use owing to the low heat capacity and low weight and significantly smaller resistance to transport of heat through the mould face.

Instead of vacuum, magnets may be used for retaining the moulds, in particular electromagnets disposed under the moulds.

The apparatus of the invention will be explained more fully below with reference to the drawing, in which

fig. 1 shows and embodiment of the suction box chain of the invention, and

fig. 2 is a perspective, partially sectional side view, illustrating how the powder mixture is filled into the mould in the manufacture of a corrugated sheet.

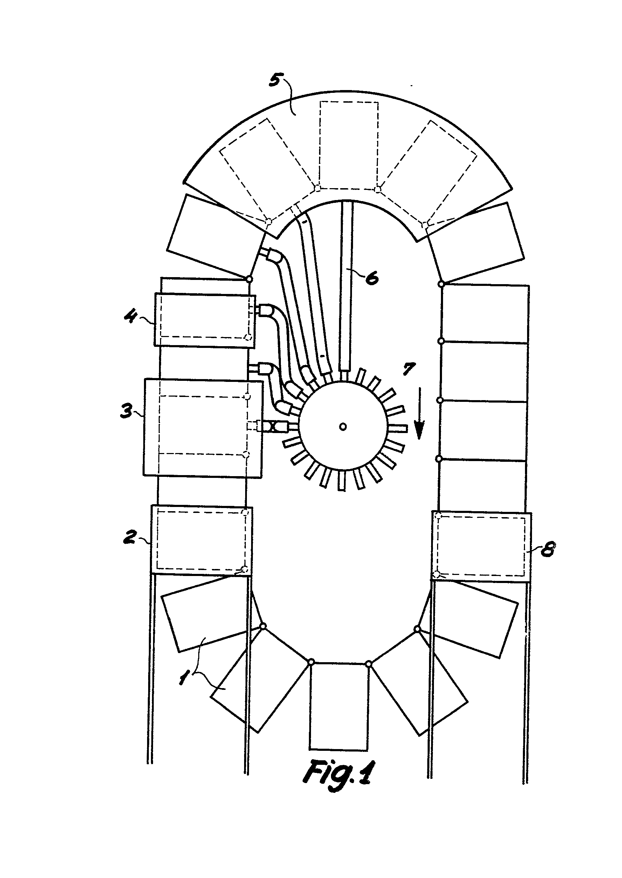

In fig. 1 the symbol 1 represent suction boxes which are moved in the direction of the arrow by means of a chain transport system: The mould is placed on a suction box at 2, the desired adhesive properties having been imparted to the mould beforehand. At 3 the mould is filled with the mixture of mineral powder and binder,
and at 4 the moulds are moved under an electric heating
box where the preheating of the powder mixture is initiated.

The powder mixture is additionally preheated at 5 into
a plastic substance. Vacuum under the suction boxes are
provided by means of vacuum hoses 6, which have one
end connected to a central vacuum and electric stuffing
box 7 and the other to the suction boxes. Thus, the
moulds will constantly be secured to the suction boxes
by vacuum while they are present on the suction box
chain.

The suction box chain has e.g. twenty suction boxes
mounted therein, which gives a suitable capacity for the
plant as a whole.

The moulds are lifted from the suction box chain at 8
and are then moved to a heated press (not shown) in
which the articles are shaped under the action of heat
and pressure to cure the binder.

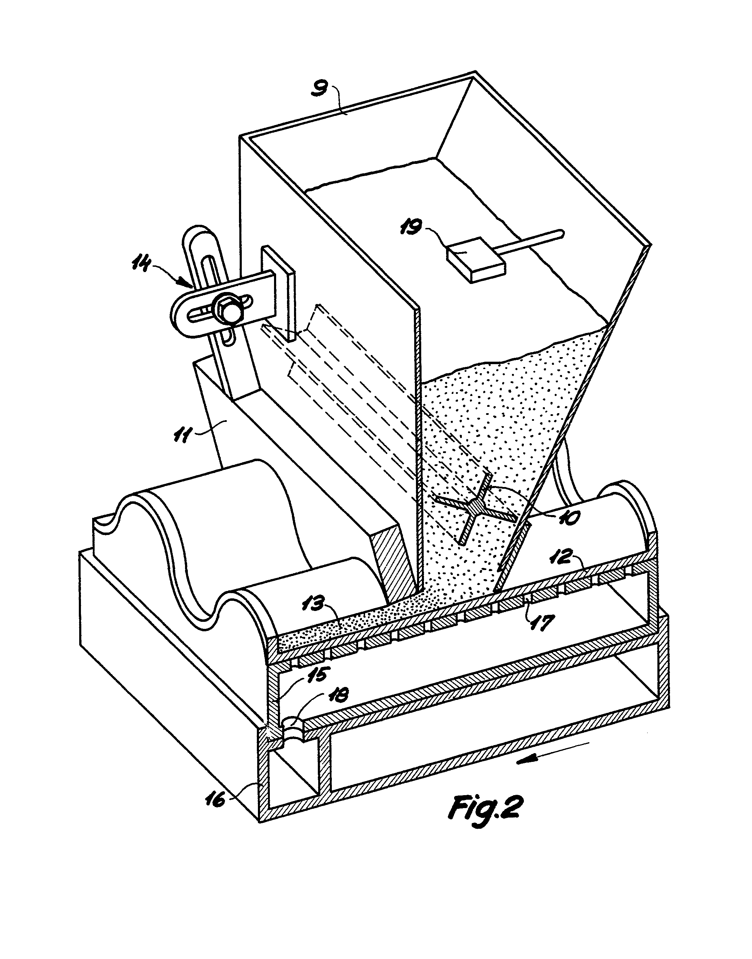

In fig. 2 the symbol 9 represents a dosage hopper containing the mixture of mineral powder and binder and
having mounted therein a stirring means 10 which extends
transversely across the entire width of the hopper and
rotates about a horizontal axis. The dosage hopper 9
mounts a shaping and compressing device 11 whose contact
face has a corrugated profile corresponding to the
desired profile of the corrugated sheet. The shaping
and compressing device 11 extends transversely across
the entire width of a mould 12 defining a corrugated
substratum and is inclined $2-10^{\circ}$, preferably $3-6^{\circ}$,
relative to the plane of the travel of the mould 12.
The mould 12 is advanced in a horizontal plane in the direction of the arrow. As mentioned, the shaping and compressing device compresses the powder mixture in the mould and smoothes out the surface. The symbol 13 represents the powder mixture filled into the mould 12. The compression of the powder mixture is illustrated by the shown greater density of the mineral particles compared to the density of the powder mixture in the dosage hopper 9.

The shaping and compressing device 11 may be adjusted to the desired height and the desired inclination by an adjustment means as schematically illustrated by means 14.

The mould 12 is removably mounted on a suction box 15 which in turn is removably placed in a driving unit 16. If the article to be manufactured is to have a different shape the suction box and the mould may easily be replaced, it being kept in mind that the upper surface of the suction box should correspond to the lower surface of the mould. The upper surface of the suction box has slots or holes 17 permitting vacuum to be provided under the mould 12.

The driving unit 16 is connected to the suction box via an opening 18 and to the central vacuum and electric stuffing box 7 through pipes (not shown).

A level control 19 ensures a suitable filling of the hopper 9.

The method and apparatus of the invention are of course not restricted to the embodiments shown. Thus, the suction box may rotate about a horizontal axis instead of rotating in the shown horizontal plane, and the dosage hopper in fig. 2 may be constructed in any other appropriate way and may e.g. contain two stirring means which, when rotated in opposite directions, press the powder mixture further down in the mould. One or more vertical stirring means may be provided as well.

Finally, in another embodiment the dosage and/or shaping and compressing device may be advanced over a mould kept stationary during the dosage and compressing operations.

The embodiment shown in fig. 2 is, as mentioned, used for making corrugated sheets. Plane articles or articles with another profile may, however, also be produced by the method of the invention.

The invention is particularly suitable for making various types of sheet-like building materials, e.g. roofing sheets. The manufactured sheets satisfy the requirements made on strength for these purposes, which appears from the following example.

EXAMPLE

The plant shown in figs. 1 and 2 was used for manufacturing corrugated sheet having a length of 600 mm, a width of 800 mm, a thickness of 6 mm and five corrugations corresponding to a standard profile 177 C-C having a corrugation height of 50 mm. The surface layer consisted of 20% acrylate binder and 80% synopal frit and had a thickness of about 0.2 mm. The surface layer was applied to the mould electrostatically. The mixture of mineral powder and binder dosed on the mould consisted of 6% phenol resin (in the form of a novolak) as binder and 94% synopal frit. Sheets were manufactured by pressing at a pressure of about 125 kg/cm$^2$ and a temperature of about 220$^{\circ}$C for 30 sec. Such sheets had a compressive strength of 300 Kp when subjected to load on a plate disposed in the centre of a crest, the corrugated sheets being supported transversely to the corrugations at a distance of 500 mm, cf. Danish Standard DSF 77/67. The sheet had a specific weight of 1900 ± 30 kg/m$^3$ at different points in the sheet and turned out to be completely proof against water from the upper side. The sheet had a water absorption of 4% after 16 hours' storing in water. The sheet met the requirements in the above standard and may be used to advantage as a roofing sheet in the same manner as a corresponding asbestos-cement sheet.

To examine the compressing effect achieved by the method of the invention the following determinations of specific weight were made:

|  | Dosage without compression | Dosage acc. to the invention | |
|---|---|---|---|
|  |  | Before pressing | After pressing at 125 Kp/cm$^2$ |
| Specific weight g/cm$^3$ | 1.27 | 1.435 | 1.888 |

1

0012589

CLAIMS

1. A method of making shaped articles from a dry mixture of a major amount of mineral powder and organic binders which is applied in a layer in moulds by means of a dosage device, said moulds defining a substratum with a profile adapted to the desired shape of the article, and is then heat-treated and compressed, c h a r a c t e r- i z e d  by filling the dry mixture into moulds whose surface has a good adhesion to the dry mixture, said moulds being advanced in a plane under the dosage device and a shaping and compressing device whose contact face has a profile adapted to the desired shape of the article and is mounted behind the dosage device transversely across the entire width of the mould and is inclined a few degrees relative to the plane of mould travel and by shaping and compressing the dry mixture to a uniform layer by means of the shaping and compressing device, followed by hot pressing of the  dry  mixture, optionally after preheating, in the mould to produce shaped articles of the desired shape.

2. A method according to claim 1, c h a r a c t e r i z e d by imparting the desired adhesion to the mould by applying a surface layer containing 15-100% by weight of an organic binder and 0-85% by weight of a mineral powder to the optionally preheated mould.

3. A method according to claim 2, c h a r a c t e r i z e d in that the organic binder forming part of the surface layer is a thermoplastic binder selected from the group consisting of polyesters, polyolefins, polyacrylates, polyvinyl acetate, polystyrenes, polyamides and polycarbonates, or a thermosetting binder selected from the group consisting of polyurethanes, polyacrylates, polyesters, epoxy resins, melamines, urea formaldehyde resins and phenol resins.

4. A method according to claims 1-3, c h a r a c t e r-
i z e d  by preheating the dry   mixture in the mould
to a temperature of about 50-200°C before hot-pressing
the mixture.

5. A method according to claims 1-4, c h a r a c t e r-
i z e d  by fixing and retaining the mould, during said
treatments, in the proper shape by vacuum under the
mould.

6. An apparatus for carrying out the method according
to claims 1-6, and comprising a dosage device, moulds,
heating devices, pressing devices, and optionally
fixing and retaining means for the moulds, c h a r a c-
t e r i z e d  in that a shaping and compressing device
is mounted behind the dosage device and extends transversely across the width of the whole mould and is
inclined a few degrees relative to the plane of the
mould travel.

7. An apparatus according to claim 6, c h a r a c t e r-
i z e d  in that the shaping and compressing device is
secured to the dosage device.

8. An apparatus according to claim 6, c h a r a c t e r-
i z e d  in that it comprises fixing and retaining
means consisting of a continuous chain of interconnected
suction boxes whose upper surface corresponds substantially to the lower surface of a mould removably mounted
on the suction box and having holes or slots to provide
vacuum under the mould.

Fig.1

0012589

*Fig.2*

## DOCUMENTS CONSIDERED TO BE RELEVANT

| Category | Citation of document with indication, where appropriate, of relevant passages | Relevant to claim |
|---|---|---|
| | FR - A - 2 302 285 (SOCIETE FINANCIERE) <br> * Claims 1,2 * <br> -- | 1-3 |
| | US - A - 2 592 518 (MAGNANI) <br> * Column 4, lines 44-52; figures 7,8 * <br> -- | 1,6,7 |
| | FR - A - 2 335 317 (EUROC) <br> * Page 4, line 25 - page 6, line 13; page 8, lines 33-39; page 10, lines 18-28 * <br> -- | 1-3 |
| D | US - A - 4 157 907 (KROYER) <br> * Column 3, lines 4-13 * <br> & BE - A - 850 466 <br> -- | 3 |
| | AU - A - 21 082/67 (INGHAM) <br> * Figure 1; claims 1,2 * <br> -- | 8 |
| A | CH - A - 481 748 (B.A.S.F.) <br> * Column 2, lines 1-32 * <br> -- | 1 |
| A | FR - A - 2 322 898 (BAYER) <br> * Claims 1,2 * <br> -- | 1-3 |
| A | GB - A - 609 026 (SALVANESCHI) <br> * Figures 2-4 * | 1,6,7 |

### CLASSIFICATION OF THE APPLICATION (Int. Cl.)

B 29 J   1/00
B 29 C   3/00
B 29 D   3/02
B 28 B   13/02
C 04 B   25/00

### TECHNICAL FIELDS SEARCHED (Int Cl.)

B 29 J
B 29 C
B 29 D
B 28 B
C 04 B
C 08 H

The present search report has been drawn up for all claims

| Place of search | Date of completion of the search | Examiner |
|---|---|---|
| The Hague | 27-02-1980 | VERMEESCH |